(19) Europäisches Patentamt
European Patent Office
Office européen des brevets

(11) EP 1 416 261 B1

(12) EUROPEAN PATENT SPECIFICATION

(45) Date of publication and mention of the grant of the patent:
**16.01.2008 Bulletin 2008/03**

(21) Application number: **03024885.0**

(22) Date of filing: **31.10.2003**

(51) Int Cl.:
***G01N 13/02*** *(2006.01)* ***G01F 22/00*** *(2006.01)*
***G01N 33/14*** *(2006.01)*

# (54) Method and procedure for swift characterization of foamability and foam stability

Verfahren und Vorrichtung zur schnellen Charakterisierung von Verschäumbarkeit und Schaumstabilität

Procédé et dispositif pour la charactérisation rapide de propension à mousser et de la stabilité de la mousse

(84) Designated Contracting States:
**AT BE BG CH CY CZ DE DK EE ES FI FR GB GR HU IE IT LI LU MC NL PT RO SE SI SK TR**

(30) Priority: **31.10.2002 EP 02024377**

(43) Date of publication of application:
**06.05.2004 Bulletin 2004/19**

(73) Proprietor: **Max-Planck-Gesellschaft zur Förderung der Wissenschaften e.V.**
**80539 München (DE)**

(72) Inventors:
- **Lunkenheimer, Klaus, Dr. habil.**
  **16321 Lobetal/Berlin (DE)**
- **Malysa, Kazimierz, Dr. habil.**
  **31-010 Cracow (PL)**
- **Wienskol, Gabriele, Dipl.-Ing.**
  **14482 Potsdam (DE)**
- **Baranska, Marta, Dipl.-Ing.**
  **31-422 Cracow (PL)**

(74) Representative: **Dey, Michael et al**
**Weickmann & Weickmann**
**Patentanwälte**
**Postfach 86 08 20**
**81635 München (DE)**

(56) References cited:
**EP-A- 0 240 432**
**EP-A- 0 252 738**
**EP-A- 0 990 878**
**US-A- 4 589 276**
**US-A- 4 677 304**
**US-A- 5 465 610**
**US-A1- 2002 116 137**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to the field of evaluation and characterization of the foamability of different foaming agents and of the properties and the stability of foams formed by using a simple and quick method.

Despite the fact that foams of very different stability are commonly met in many industrial processes and everyday life, a generally applicable, simple, quick, reproducible and reliable test and method of foam evaluation does not exist. Various tests and parameters for foam characterization are available. For example, the Bartsch (shaking) and the Ross-Miles (pouring test) methods, in our opinion, are the most commonly applied tests for comparing the solutions foamability [1]. In the shaking test a certain amount of solution is vigorously shaken in a locked cylinder. In the Ross-Miles method a definite amount of solution is poured from the upper vessel through an orifice of definite diameter onto a bed of the same solution being located in a cylinder at a standard distance from the orifice. The volume of the foam formed and the lifetime of either the entire or half the height of the foam formed are measured in both methods [2,3]. The main advantage and the reason of the wide application of these methods consist in their simplicity. To improve the reproducibility of these various methods modifications and standardization were applied [3-6]. An interesting modification was proposed recently by Pinazo et al. [7]. Unlike the classical Ross-Miles test they kept the volume of liquid in the vessel constant by continuously pumping back the dropped solution. The initial foam height was measured after the solution had flowed for 1 min and the foam height changes with time were determined. However, the shaking test as well as the Ross-Miles method have in common the similar and fundamental disadvantage, that the amount of gas introduced into the system is not controlled at all.

Certainly, there are other methods applied in foamability studies in which the amount and the velocity of the gas introduced into the system are well controlled, for example, the pneumatic methods [2,3,8, 9]. However, these methods are more complicated, laborious and can hardly be applied in a standard procedure for systems giving foams of very different stability [10].

The general lack of the methodical characterization of the foam behaviour means that there is no uniform standardized method by means of which all kinds of foam can be characterized by identical parameters and/or boundary conditions.

At present a device called Foamscan is commercially available [11, 12]. This method adopts the pneumatic technique well-known for the characterization of unstable foams [2, 13, 14]. The foam is created in a glass tube and its time dependent height is measured by image processing while the residual liquid is measured by a conductivity meter. The foaming solutions are characterized in such way that a gas of constant flow is bubbled through the solutions until an identical foam height is reached in all cases. This maximum height is used as reference state. In the Foamscan apparatus the gas flow and the end of sparging are defined. However, the period of sparging time required for forming the same foam volume is rather long, of the order of magnitude of a few minutes. In [11] this time amounts to 8 minutes (commercial soap solutions). A characterization of the foam evolution is attempted by discriminating two periods both of which cover solution draining and foam collapse in different ratios.

Various parameters like foaming capacity, foam maximum density or half-life time of liquid in foam are derived from the time dependence of the parameters related to the reference state [11, 12]. In addition to that a texture characterization by video image analysis was performed. However, the result is disappointing. Thus, it is stated in [11] that "...The proposed method of (video image) analysis of texture does not allow investigations of the physical mechanism of foam formation and destabilization..."

Recently another foam test apparatus, called SITA Foam Tester 2000, was developed [15, 16]. In this method the input of air is performed by a rotor and the foam height is measured mechanically by various steel needles located on top of the foam. This method is applicable to very stable foams only. Measuring the foam height by some downward motion of various needles is not only inconvenient but also influences the foam as the contact of the needles with the top foam layer can make it rupture. Finally, the input of gas is not well-defined

U.S. 5,465,610 describes a device for the characterization of foaming properties of a product at least partially soluble in a liquid, the device comprising a transparent analysis column provided at its base with a porous filter allowing the homogeneous introduction of a gas flow through the column in order to cause foaming of the product located at the base of the analysis column. The device further comprises an automatic measuring system for determining the foam height formed in the column, an automatic measuring system for determining the volume of product to form the foam, means to visualize and/or to process the measured data, and a pressure compensation system to avoid drainage and percolation of the product through the filter when gas injection is stopped.

EP 0 252 738 A2 relates to a foam meter used for the characterization of the foaming tendency of liquids and the performance of antifoam formulations, the foam meter comprising (a) a thermostatically controlled foam column open at one end and containing a mesh having a substantially uniform pore size at the other end, (b) means for sparging a gas into the column through the mesh at a predetermined temperature and pressure, and (c) means for measuring the volume of foam generated upon sparging the gas through a liquid under test placed on the mesh in the column.

EP 0 990 878 A1 discloses a method and an apparatus for determining the stability of a layer of foam on a liquid column by measuring the time interval during which a surface of the layer of foam moves a certain distance under particular circumstances, which time interval is subsequently compared with a reference time interval associated with said distance.

The above-described procedures are not totally satisfactory and they are often laborious, longlasting and irreproducible. Often the parameters and procedures are appropriate either to metastable or to unstable foams only. Moreover, sometimes they are not related to fundamental properties of the foam systems investigated.

An object of the present invention therefore was to provide a simple, quick, reproducible and generally applicable procedure for the determination and evaluation of foam properties. It was a further object of the present invention to provide a relatively inexpensive procedure for testing foam stability of any foaming solution by a well-defined process under well-defined conditions. A further object was to provide a simple apparatus either manual or automated, which can be utilized for the foaming tests, and a procedure which can quickly discriminate foams of different stability and evaluate the stability of the foams formed by appropriate parameters that refer to physically well-defined boundary conditions.

A further object was to provide an apparatus which can be utilized for characterizing both (meta)stable as well as unstable foam systems by the same procedure that can be run manually as well as automatically and by the same parameters.

According to the invention these objects are achieved by a method for determining and/or evaluating foam properties of a solution as defined in claim 1 and 9, wherein a predefined volume of gas is introduced into a predefined volume of solution to be tested and foam height $h^F$ or/and efflux of solution $h^S$ are measured. As the cross-section of the foam column is constant, it is also possible to determine the corresponding volumes of foam $V^F$ or of efflux of solution $V^S$.

A definite amount of gas, preferably air, is dispersed in a definite volume of solution by introducing the gas with definite velocity into the solution. The process can be performed manually as well as automatically. Foam height and efflux of solution are measured simultaneously in dependence on time.

Advantages of the inventive method of foam characterization, in particular, are

- Well-defined boundary conditions (volume of solution, volume of dispersed gas, condition of gas supply)
- gas content per unit volume of solution adjustable and measurable (convenient for theoretical description of foamability). This is hardly possibly for other methods like Bartsch, Ross-Miles or methods using stirring, shaking, whipping, etc.
- parameters by means of which the foam stability is characterized refer to physically reasonable and well-defined conditions. They are very sensitive to foam stability covering several orders of magnitude.
- unstable and metastable foams can be characterized by an identical procedure.
- simplicity
- swiftness: foam stability of very stable foams can reasonably be characterized by short time measurements.
- reasonable reproducibility.

By the method of the invention foams and foam properties can be measured in a standardized manner, whereby the parameters to be determined are not chosen arbitrarily but have a physicochemical basis. According to the invention a predefined volume of gas is introduced into a solution to be tested, e.g. a solution of a detergent or solutions for which foam properties are important, such as beer, waste water, detergent solutions, etc., whereby a predefined volume of such solution is used. The general set-up is further defined by predefining the volumes of solution and gas. For example, the ratio of solution volume to gas volume is 1:10 to 10:1, more preferably 1:5 to 5:1 and, especially preferred, 1:1.8 to 1 :2.2. The use of a ratio of volume of solution to volume of gas introduced of 1:2 proved to be particularly favorable. Preferably, the gas is introduced into the solution at a constant rate, e.g. at a rate of from 1 to 100 l/h, more preferably from 10 to 30 l/h and, in particular, at about 18 l/h. Therefore, the amounts of gas and solution used to form the foam are well-controlled according to the invention.

Then foam height and/or efflux of solution are measured to characterize the foams, whereby physicochemical parameters of the foams can be derived from these measured quantities. An essential advantage of the invention lies in that all kinds of foams, i.e. metastable and non-stable foams can be tested quantitatively by the same procedure. The characteristic physical values to be measured provide significant values of all kinds of foams. Definite and equal boundary conditions are applied in each case.

By applying definite and uniform boundary conditions the prerequisites for investigating the mechanism of foam decay and foam stability are provided according to the invention.

Principally the foam decay can be described by three different stages of decay according to the ratio of the ruptured foam volume and the corresponding volume of drained solution: a) initial stage: only syneresis of draining solution, no foam rupture; b) intermediate (transitional) stage: syneresis and rupture occur simultaneously; c) final stage: negligible syneresis, only rupture progressing.

The parameters used to characterize foam stability are either duration of such periods or efflux rate at characteristic states of the decaying foam system.

In particular, one or more of the parameters described in detail below selected from $\Delta h^F$, $\Delta h^S$, $\Delta h^F/\Delta h^S$, $t_{dev}$, $t_{trans}$, $v_{dev}{}^S$, $v^F{}_{dev}$ or/and $v_o$ are determined. $\Delta h^F = (h_o{}^F - h_t{}^F)$ and $\Delta h^S = (h_t{}^S - h_o{}^S)$ wherein $h_o{}^F$ and $h_o{}^S$ are the foam and solution heights immediately after gas introduction (t=O), while $h_t{}^F$ and $h_t{}^S$ are the foam and solution heights at time t.

The method according to the invention and the parameters given allow to determine i) foamability, ii) foam stability, iii) liquid contents in foam or/and drainage rates.

Thus, according to the invention, novel parameters characterizing foam properties can be derived which are applicable to metastable as well as to unstable foams. This enables shorter times for testing foam systems. The description of foam stability can be improved considerably thereby because they can be related to reasonable, physically well-defined conditions instead of to arbitrarily chosen conditions.

The method allows one to get information about stability of metastable foams in a test lasting only a few minutes instead of measurements of foam half lifetime lasting hours (cf. Ross-Miles method).

The new stability or/and foamability parameters do not only correlate with parameters used so far for certain methods of characterization of stable foams like half foam lifetime or R5-parameter, but for the first time the foam stability of unstable foams can be characterized by the same parameters. This makes it possible to standardize and unify all methods of foam characterization.

The test experiments according to the invention are simple, quick and reproducible. Further automation of the test procedure is easily possible. While air is preferably used as gas, in general different kinds of gas are applicable.

According to the invention, first, a predefined volume of gas is introduced into a predefined volume of solution to be tested, preferably with a predefined velocity. Thereby at time to a certain amount of foam and, therefore, a certain foam height is formed. Immediately after the foam formation, that is in the initial stage, only liquid emerges from the foam, i.e. the reduction of the foam height just corresponds to the increase in solution, i.e. $\Delta h^F = \Delta h^S$. Thus, $\Delta h^F/\Delta h^S = 1$ in said initial stage. In the case of stable foams the initial stage is at least 2 s, more preferably at least 5 s and particularly preferred at least 10 s. At a time $t_{dev}$ foam rupture begins. Thus, during said intermediate or transitional stage, syneresis, and rupture take place at the same time. This means that $\Delta h^F > \Delta h^S$ and, thus, $\Delta h^F/\Delta h^S > 1$. If a transient stage occurs, this means that rupture of the foam already takes place, while the foam still contains liquid. Finally, the foam proceeds to the final stage, wherein only rupture of foam occurs, however, no noticeable amount of solution emerges any longer. In that stage practically no liquid is left in the foam and $\Delta h^F >> \Delta h^S$. [0026]

According to the invention, preferably, the following quantities are determined in a standardized manner:

a) foam height dependence on time;
b) amount of the solution syneresing out of the foam column with respect to on time;
c) characteristic time intervals of various stages of foam decay; or/and
d) efflux rates at characteristic stages of foam decay.

To analyze and generally characterize the behaviour of a foam formed from a solution the following dependences are preferably used:

The height of the foam column, $h^F$, together with the corresponding height of the solution column, $h^S$ is registered, with respect to time. The reference state, to, refers to that time when the gas supply is finished. Then the decrease of the foam column, $\Delta h^F = (h_O{}^F - h_t{}^F)$, is plotted against the corresponding increase of the syneresing solution, $\Delta h^S = (h^S{}_t - h^S{}_0)$. According to the characteristic behaviour of this dependence foams can generally be discriminated by three different stages of foam decay by means of which different types of foam can be discriminated. The three stages are characterized by the behaviour in their:

i) initial stage,
ii) transient stage, and
iii) final stage.

Within these characteristic stages the following typical foam decay behaviour is met.

In the initial stage only syneresis occurs, i. e. the decrease of the foam volume is only brought about by the draining of the solution contained in the foam. In stage ii) foam drainage and foam decay occur simultaneously, whereas in the final state iii) drainage is negligible and foam rupture prevails.

The term "liquid content" as used herein refers to the amount of solution contained in the entire foam.

The term "drainage" refers to the process of outflow (efflux) of the solution from the foam layers. As a result of the drainage, the liquid content in the foam decreases and the foam films become thinner.

By means of these stages the foam behaviour can qualitatively be characterized as follows:

a) if initially, i.e at very short times, the foam volume ruptured is greater than the draining solution, i. e. if $\Delta h^F > \Delta h^S$, it means that the foam is unstable.

b) if initially there is a distinct period (e.g. at least 2 s, more preferred 10s), characterized by $\Delta h^F = \Delta h^S$ and/or $\Delta h^F/\Delta h^S = 1$, this means that within this peroid there is no foam rupture, i.e. the foam is stable.

The stable foams can further be discriminated by the occurrence of a transitional state. The initial stage of stable foam behaviour is described by $\Delta h^F/\Delta h^S = 1$. At later times, that is at $t > t_{dev}$, its behaviour is described by $\Delta h^F/\Delta h^S \gg 1$, in particular, $\Delta h^F/\Delta h^s > 10$, preferably $h^F/h^S > 100$. The latter condition means that the foam system is very stable. If, however, there appears a distinct transitional state (having a duration of at least 2 s, more preferred of at least 10 s), connecting the alternative initial and final stages, that is characterized by $\Delta h^F/\Delta h^S > 1$, in particular, $1.1 < \Delta h^F/\Delta h^S < 5$, preferably $1.5 < \Delta h^F/\Delta h^S < 3$, this then means that the stable foam is of medium stability.

These different features are illustrated in Fig. 2 for three different foam systems, namely for a solution of 1.5 x $10^{-3}$ M octanoic acid, as an example of an unstable foam system, for a solution of 3 x $10^{-4}$ M Nadodecylsulfate as an example of a stable foam system having a medium stability and for a solution of 3 x $10^{-4}$ M decyl-β-D-glucopyranoside as an example of a very stable foam system.

To characterize the dynamic foam behaviour various parameters are used according to the invention which refer to the characteristic physical stages of foam decay.

a) The difference $(\Delta h^F - \Delta h^S) = f(t)$ with respect to time is used to determine that time when the foam films begin to rupture. This is the time when the quantity $(\Delta h^F - \Delta h^S)$ begins to deviate from zero increasing with time for times $t > t_{dev}$. This characteristic time is called time of deviation $t_{dev}$. The greater the value of $t_{dev}$ the more stable the foam will be. The characteristic behaviour $(\Delta h^F - \Delta h^S) = f(t)$ is illustrated in Fig. 3a for solutions of various surfactants. This figure clearly reveals that $t_{dev}$ may cover a few orders of magnitude. For unstable foams, $t_{dev}$ is preferably ≤ 1 s, in particular, ≤ 0.5s and more preferably ≤ 0.25s. For stable foams $t_{dev}$ is preferably > 1s, more preferably > 10s.

b) Conveniently the parameter $t_{tr}$ is applied. This parameter refers to that time when the efflux of the solution draining out of the foam becomes negligible, i. e. at $t \geq t_{tr}$, then $\Delta h^S \approx 0$. The value of the transition time is defined by the inflection point of the $(\Delta h^F - \Delta h^S) = f(t)$ dependence, as illustrated in Fig. 3b.

The dependence $t_{tr}$ (c) characterizes the foam behaviour of any foaming solution in a well-defined way. This is illustrated for various surfactant solutions in Fig. 4. As seen the $t_{tr}$-values of foaming solutions span several orders of magnitude.

By this parameter foam stability can be described in a simple and easy manner. Thus, $t_{tr} < 10$ s means unstable foam, whereas $t_{tr} > 10$s stands for (meta)stable foam. The higher the $t_{tr}$-value the more stable the foam system will be. Thus, for stable foams preferably $t_{tr} \geq 20$ s, more preferably $t_{tr} \geq 30$s and most preferably $t_{tr} \geq 100$s.

The parameter $t_{tr}$ can be correlated with parameters usually applied for foam characterization such as the time $t_{1/2}$ referring to that time when the foam column has reached half of its initial height or the R5-value [1] (foam height after five minutes related to the initial foam height).

In Fig. 5 the time $t_{1/2}$ of half foam height rupture is plotted against the transitional time for the solutions of various surfactants, $t_{tr}$. For $t_{1/2} < 10^3$s there is a linear relationship between $t_{1/2}$ and $t_{tr}$, whereas at $t_{1/2} > 10^3$s stable foams can still be further discriminated by the parameter $t_{tr}$, while the corresponding $t_{1/2}$-values remain unaltered.

Fig. 6 shows the correlation between the R5-value and the transition time $t_{tr}$ for solutions of surfactants revealing medium foam stability.

Fig. 7 shows the like dependence R5($t_{tr}$) for solutions of the two ionic surfactants sodium and lithium dodecylsulfate revealing strong foam stability.

Foam stability can be reasonably well characterized by relating the foam height to a certain value of the foam colum during the decay period, like, for example, the R5-value which refers to that height to which the foam colum has ruptured after 5 minutes related to the initial foam height. Thus, an equivalent R10-value can be formulated. However, if one relates to a certain period of foam height it has to be ensured that this reference time, $t_{ref}$, must always be equal to or greater than the deviation time, i.e.

$$t_{ref} \geq t_{dev}. \qquad (1)$$

In characterizing the foam stability of a series of diluted solutions and/or of a homologous series of surfactants the time of reference must always be equal to or greater than the highest $t_{dev}$- value of that series.

Foam characterization can also be performed by using the rate of foam decay and/or the efflux rate of the draining solution

$$v^F = (dV^F/dt) \quad (2)$$

$$v^S = (dV^S/dt). \quad (3)$$

Doing so, it is important to refer to a physically well-defined reference state. Thus, we propose to use the rate of foam decay and of efflux rate at the time of deviation, $t_{dev}$. This rate is denoted by

$$v^F_{dev} = (dV^F/dt)_{dev} \quad (2a)$$

$$v^S_{dev} = (dV^S/dt)_{dev} \quad (3a)$$

As the cross-sectional area of the foam column is constant the change in foam and/or solution volumes can easily be determined by measuring the changes of the corresponding heights. Thus, such specific rates are the rate of foam decay and/or the rate of the change of the solution's level per unit cross-sectional area of the foam column [$cm^3$/(s x $cm^2$)].

Fig. 8 presents the $v^F_{dev}$-values of the specific rates of foam decay at $t_{dev}$ for solutions of different surfactants. As can be seen the $v^F_{dev}$-values span four orders of magnitude. Unstable foam systems are characterized by comparatively high efflux rates and almost constant $v^F_{dev}$-values, whereas the efflux rates of stable foam systems are smaller by at least one order of magnitude. For very stable foams the efflux rates are strongly retarded down to three orders of magnitude as compared to the solutions forming unstable foams.

The initial efflux rate of solution from foam, $v^S_O$, is also a convenient parameter to distinguish between foams of different stability. The $v^S_o$ values are determined from the initial slope of the $h^F$=f(t) dependence. As this initial period is shorter than $t_{dev}$, thus it means that $\Delta h^F = \Delta h^S$, and

$$v^S_0 = v^F_0 = v_0 = (dh^F/dt)_{t\to 0} = (dh^S dt)_{t\to 0} \quad (4)$$

Fig. 9 presents the $v_o$-values as a function of concentration for solutions of different surfactants.

Usually the short-lived foams of wet systems have had to be characterized by steady state procedures [13, 14]. The method proposed in this patent does not need to apply to steady state processes. By it these foams of short lifetime can be characterized by the procedure as well.

This invention comprises a process for forming (meta)stable und unstable foams by introducing a definite amount of gas into a definite amount of solution with definite velocity and provides the characterization of foam stability in terms of dynamic parameters that refer to well-defined stages of foam decay.

According to the invention the foamability of a system can be determined. Foamability is the ability of a solution to form a foam column after introduction of a definite volume of gas at a definite velocity. The higher the volume of the system (foam plus solution with gas bubbles) immediately after introduction of the gas, the higher is the foamability of the solution.

Further, foam stability can be determined. Foam stability is the ability of the foam layer to last or survive without rupture and to counteract the foam film's rupture leading to a decay of the foam column/foam height. Higher foam stability means that foam films and foam layer will last comparatively longer under identical conditions.

The invention is further illustrated by the accompanying figures and the following examples.

Fig. 1 is a vertical sectional view of a test apparatus not part of the present invention used for the measurements of foam stability of solutions of surface-active agents.

Fig. 2 shows the difference between the initial height of the foam column ($h^F_0$) and the foam height at time t, ($h^F_t$), $\Delta h^F = (h^F_0 - h^F_t)$, with respect to the corresponding volume of the drained out solution, $\Delta h^S = (h^S_t - h^S_0)$, for three different aqueous surfactant solutions. Δ Δ Δ 1.5 x $10^{-3}$ M octanoic acid in 0.005 M hydrochloric acid;

O O O 3 x $10^{-4}$ M decyl-β-D-glucopyranoside; □ □ □ 3 x $10^{-4}$ M sodium dodecyl sulfate.

Fig. 3a Plot of the difference ($\Delta h^F$ - $\Delta h^S$) against the logarithm of time for different surfactant solutions. The arrows indicate that time when foam decay starts, $t_{dev}$.

□ □ □ 3 x $10^{-4}$ M sodium dodecyl sulfate; ○ ○ ○ 2 x $10^{-3}$ M lithium dodecyl sulfate;
Δ Δ Δ 3 x $10^{-4}$ M decyl-β-D-glucopyranoside; ∇ ∇ ∇ 1.5 x $10^{-3}$ M octanoic acid in 0.005 M hydrochloric acid.

Fig. 3b Examples of the dependencies of ($\Delta h^F$ - $\Delta h^S$) against the logarithm of time with their inflection points marked by arrows. The time at the inflection point is defined as the transition time $t_{tr}$. □ □ □ -3x$10^{-4}$M sodium dodecyl sulfate; ○ ○ ○ 2x$10^{-3}$M lithium dodecyl sulfate.

Fig. 4 Time of transition, $t_{tr}$, when the syneresis of the foam has become negligible ($\Delta h^S \approx 0$), with respect to concentration for some solutions of different surfactants. Δ Δ Δ octanoic acid in 0.005 M hydrochloric acid; ○○○ decyl-β-D-glucopyranoside; ∇∇∇ decyldimethylphosphine oxide; □ □ □ sodium dodecyl sulfate.

Fig. 5 Time of rupture of half of the foam column, $t_{½}$, with respect to the corresponding transitional time, $t_{tr}$, for several solutions of various surfactants.

V V V nonyl-α-D-glucopyranoside; Δ Δ Δ decyldimethylphosphine oxide; □ □ □ sodium dodecylsulfate; ○ ○ ○ lithium dodecylsulfate.

Fig. 6 R5-value with respect to the corresponding time of transition, $t_{tr}$, for several solutions of three different surfactants revealing medium foam stability.

Δ Δ Δ octyl-β-D-glucopyranoside; O O O nonyl-α-D-glucopyranoside ;
□ □ □ decyldimethylphosphine oxide.

Fig. 7 R5-value with respect to the corresponding time of transition, $t_{tr}$, for solutions of surfactants revealing strong foam stability. □ □ □ sodium dodecylsulfate; O O O lithium dodecylsulfate

Fig. 8 Specific rate of foam decay at the time of deviation, $v^F_{dev}$, with respect to concentration. ∇ ∇ ∇ heptanoic acid in 0.005 M HCl; O O o nonyl-α-D-glucopyranoside; Δ Δ Δ decyldimethylphosphine oxide; □ □ □ sodium dodecylsulfate. (Specific rate is the rate of foam decay which is the efflux rate per unit cross-sectional area of the foam column [cm/s])

Fig. 9 Initial rate of solution efflux from foam (equal to the foam decay rate), $v_0$ with respect to concentration. ∇ ∇ ∇-heptanoic acid in 0.005 M HCl; O O O-nonyl-α-D-glucopyranoside; Δ Δ Δ-decyldimethylphosphine oxide; □ □ □ -sodium dodecyl sulfate.

## Example 1

### 1.1 Method and standardized manner of measurements

In developing the data for the curves shown in the Figures, we used the method of testing foams according to the invention which gives accurate, reproducible and representative results.

The apparatus not part of the present invention used in the test is very simple and is shown schematically in Fig. 1. The set-up consists of a glass column of 42-mm inner diameter and 25 cm length with a fritted glass G-2 at the bottom for gas dispersing, and a syringe for supplying a definite amount of gas (e.g. air) into the solution to be foamed. Beneath the frit is a stopcock, which is connected to a small pump the piston of which is driven automatically at a preset gas flow rate of e.g. 18 l/h. In the majority of the experiments the volumes of 50 ml of solution and 100 ml of gas were used. The gas from the syringe was introduced into the solution through the sintered glass. 100 $cm^3$ of gas (90 $cm^3$ in the automatic version [Paar registration]) were supplied manually within the time period of 20s or 18s, i.e. an average volumetric gas velocity of 18 l/h was used in the prevailing number of the experiments. It is recommended as the standard procedure. For unstable foams it is recommended to apply a gas supply of about twofold velocity.

### 1.2 Procedure

The stopcock was locked when the solution (50 ml) was poured into the column in such manner that no foam was formed. If a foam layer was formed during the pouring of the solution, introduction of gas was deferred until the solution mirror was seen.

The filled foam column is fixed between the optical sensors of a Foam Test System (FTS) of the firm Paar. This apparatus was originally developed for observing foam decay of beer in beer glasses. To adapt this equipment to the foam measurements the bottom of the FTS had been removed. After having positioned the filled glass column appropriately between the sensors, the stopcock was opened and subsequently 90 $cm^3$ of air were bubbled via the frit into the surfactant solution with a flow rate of 18 l/h by a connected RTU-Dosierpumpe (firm Paar). Then foam and solution height were measured simultaneously. Due to the certain size of the photodiodes the minimum measurable difference of the height of the foam and/or the solution column was 2.5mm. The experiments were performed at room temperature (22±1˚C).

In Fig.2 the difference between the initial height of the foam column and the foam height at time t, $\Delta h^F$, is plotted against the corresponding height of the solution drained out, $\Delta h^S$, for three different aqueous surfactant solutions. The three curves are typical of the three characteristic stages of foam decay generally found. As long as the slope of this curve obeys the relationship $\Delta^F/\Delta h^S = 1$, there is no foam rupture (stage I). The duration period of this stage is denoted by $t_{dev}$. If $\Delta h^F/\Delta h^S > 1$, rupture and syneresis occur simultaneously (stage II). Finally, in the case $\Delta h^F/\Delta h^S >> 1$ together with $h^S_t \approx$ constant, this means that syneresis had finished and only rupture remained (stage III). The end of stage II and the beginning of stage III is denoted by $t_{tr}$ (time of transition - see Fig. 3b).

For the octanoic acid solution there is only a very short time interval in which stage I was observed. It is finished already at a time as short as 0.1 s. (As the method is at its detection limit at such short times, this is the lowest detectable time). Having passed this stage, there is rupture together with syneresis. However, stage III was not met because the foam ruptured The sodium dodecylsulfate solution shows a distinct interval of the stage I which lasts for 1.2 s. (It lasts much longer, i. e. about 50s, for the sodium dodecylsulfate solutions of the highest concentrations.) This is followed by the pronounced stage II which is finished after only 220 s. At $t >> 220$ s there is only foam rupture (stage III). This period then prevails for a long time of more than 2000 s.

The $3 \times 10^{-4}$ M decyl-β-D-glucopyranoside solution reveals only the stages I and III. This means that there is no detectable transition period in which syneresis and rupture occur simultaneously. As long as the solution drains out of the foam, it did not rupture. The latter state started only after the syneresis had been finished. This behaviour is usually met for foam systems of the highest stability.

In Fig.3a the difference of the variables of Fig 2, $(\Delta h^F - \Delta h^S)$, is plotted against the logarithm of time for different surfactant solutions. The arrows indicate that time when the foam decay starts, denoted by $t_{dev}$. As long as $(\Delta h^F - \Delta h^S) = 0$, there is only syneresis, i. e. stage I is proceeding. That time when the dependence $(\Delta h^F - \Delta h^S)$ begins to deviate from zero is called time of deviation, $t_{dev}$. As can be seen, the characteristic times of deviation cover three orders of magnitude depending mainly on the stability of the foam, the concentration of the solution and/or the structure of the surfactants.

Fig. 3b illustrates the method of determination of the value of the transition time $t_{tr}$. The transition time, $t_{tr}$, when the syneresis of the foam was finished ($\Delta h^S \approx 0$), is plotted against the concentration of several solutions of different surfactants in Fig.4. Unstable (wet) and (meta)stable (dry) foam systems can easily be discriminated by the following conditions

$t_{tr} < 10$ s → unstable,
$t_{tr} > 10$ s → stable.
For very stable foams $t_{tr} \geq 100$ s.
$t_{tr} < 10$ s → unstable,
$t_{tr} > 10$ s → stable.
For very stable foams $t_{tr} \geq 100$ s.

For simple surfactants the parameter $t_{tr}$ covers about four orders of magnitude depending on the type of the surfactant and the concentration of its solutions.

Fig. 5 shows the time of rupture of half the foam column, $t_{1/2}$, with respect to the corresponding transition time, $t_{tr}$, for several solutions of various surfactants. It is seen that the "classical" parameter $t_{½}$, generally used to characterize foam stability, is correlated to the parameter $t_{tr}$ within a broad concentration range, except at the highest concentrations.

To further prove the reasonability and plausibility of the parameter $t_{tr}$, another "classical" parameter, the R5-value, is presented in Fig.6 with respect to the corresponding transition time, for several solutions of different surfactants revealing medium foam stability. In every case longer transitional times correspond to increasing R5-values.

Fig. 7 represents the similar dependence of the R5-values on the corresponding transition times, $t_{tr}$ for solutions of surfactants revealing strong foam stability. As seen there is a good correlation between the R5-values and the corresponding transitional times. This is for the simple reason given by equation (1), see above, that the reference time, $t_{ref}$, has to be equal to or greater than $t_{tr}$.

Fig. 8 is the specific rate of foam decay at the time of deviation, $v^F_{dev}$, in dependence on concentration. The specific rate of foam decay is the rate related to the cross-sectional area of the foam column [$cm^3/(s \times cm^2)$], that is independent of the diameter of the foam column. In this figure the $v^F_{dev}$ -values are given for solutions of various surfactants concentration. Thus, the greatest $v^F_{dev}$-values are characteristic of wet foams whereas the lowest $v^S_{dev}$-values are typical of dry foam systems. The lower the specific efflux rate is the more stable the corresponding foam will be.

Fig. 9 shows the initial rates of solution efflux from foam that is equal to the foam decay rates $v_0$ with respect to the concentration of different surfactant solutions.

1.3 To avoid artefacts stock solutions of the surfactants used for the experiments heretofore described were purified by a special high performance purification procedure [17]. The required grade of "surface-chemical purity", denoted as scp, was checked by applying the criterion given in [18].

All glassware and the glass column with the frit used for the foam measurement were cleaned with peroxysulfuric acid and rinsed with bidistilled water produced by a quartz distilling apparatus. Bidistilled water was sucked though the frit repeatedly. The column was filled with bidistilled water and kept overnight. Before use the water was sucked off from the bottom outlet via the frit.

**References**

1.Gohlke, F. S., Bestimmung des Schaumvermogens von Detergentien nach Ross-Miles , Parfümerie und Kosmetik 45(1964)59
2.Bikerman, J.J., Foams, Springer-Verlag, Berlin Heidelberg New York, 1973
3.Exerowa, D., Kruglyakov, P.M., Foam and Foam Films: Theory, Experiment, Application, Elsevier, 1998
4.Kelly, W. R., Borza, P. F., Foam Test Method , J. Amer. Oil Chemist s Soc. 43(1966)364
5.Lemlich, R., Foam Fractionation in the Crits Ring Test , J. Colloid Interface Sci. 37(1971)497
6.Lai, K.-Y., McCandlish, E. F. K., Aszman, H., in Liquid Detergents (surfactant science series, vol. 67, K.-Y. Lai, ed.), Marcel Dekker, New York, 1997, chapter 7: Light-Duty Liquid Detergents
7.Pinazo, A.P., Infante, M.R. and Frances, E.I., Relation of foam stability to solution and surface properties of gemini cationic surfactants derived from arginine, Colloids and Surfaces A 189(2001)225-235
8.Garrett, P.R., Recent developments in the understanding of foam generation and stability, Chemical Engin. Science 48(1993)367
9.Pugh, R.J., Foaming, foam films, antifoaming and defoaming, Advances Colloid Interface Sci. 64(1996)67
10.Khristov, Khr., Malysa, K. and Exerowa, D., Steady state foams: Influence of the type of liquid films, Colloids and Surfaces 11(1984)39
11.Guillerme, C., Loisel, W., Bertrand, D., Popineau, Y., Study of foam stability by video image analysis: relationship with the quantity of liquid in the foam, J. Texture Studies 24(1993)287
12.Razafindralambo, H., Popineau, Y., Deleu, M., Hbid, C., Jacques, P., Thonart, P., Paquot, M., Surface-active properties of surfactin/iturin A mixtures produced by bacillus subtilis , Langmuir 13(1997)6026
13.Malysa, K. A. Pomianowski, A. "Charakterystyka wspoldzialania flotacyjnego spieniacza i kolektora", Fizykochem. Problemy Przerobki Kopalin, 10(1976)119-131
14.Malysa, K., Lunkenheimer, K., Miller, R., Hartenstein, C., Surface elasticity and frothability n-octanol and n-octanoic acid solutions", Colloids & Surfaces, 3(1981) 329-338
15.Perrin, F., Jung, U., Schaum nicht nur wichtig für gutes Bier; Laborpraxis, März 2000, p. 60ff
16.SITA-Internet webpage:

http://www.sita-messtechnik.de/forschung/index.html

17.Lunkenheimer, K., Pergande, H.-J. und Krüger, H., Apparatus for Programmed High-Performance Purification of Surfactant Solutions , Rev. Sci. Instrum. 58 (1987) 2313
18.Lunkenheimer, K. und Miller, R., A Criterion for Judging the Purity of Adsorbed Surfactant Layers , J. Colloid Interface Sci. 120 (1987) 176


**Claims**

1. A method for determining and/or evaluating foam properties of a solution, wherein a predefined volume of gas is introduced into a predefined volume of the solution to be tested and foam height $h^F$ and efflux of solution $h^S$ are measured in relation to time,
**characterized in that** foam stability is classified on the basis of the ratio $\Delta h^F/\Delta h^S$, wherein, in the initial stage, the reduction of foam height $\Delta h^F$ corresponds to the increase of solution $\Delta h^S$ such that $\Delta h^F/\Delta h^S = 1$, and wherein at a time of deviation $t_{dev}$ foam rupture begins, with $t_{dev}$ being indicated by the transition from $\Delta h^F/\Delta h^s = 1$ to $\Delta h^F/\Delta h^S > 1$.

2. The method according to claim 1, wherein the foam decay is classified into the categories

(a) initial stage,
(b) intermediate stage or
(c) final stage.

3. The method according to claim 1 or 2, wherein additionally at least one of the characteristic parameters $\Delta h^F$-$\Delta h^S$, $t_{tr}$, $v^F$, $v^S$, $v^F_{dev}$, $v^S_{dev}$, $V^F$, $V^S$ and/or $v_0$ is determined.

**4.** The method according to any of the preceding claims, wherein

(i) foamability,
(ii) foam stability,
(iii) liquid content in foam,
(iv) drainage rates

are determined.

**5.** The method according to any of the preceding claims, wherein a classification into

(I) unstable foams or
(II) (meta)stable foams

is performed.

**6.** The method according to any of the preceding claims, wherein the foam is classified as unstable foam, if $t_{dev} \leq 1$ s or classified as (meta)stable foam, if $t_{dev} > 1$s, preferably if $t_{dev} > 10$s.

**7.** The method according to any of the preceding claims, wherein the foam is classified as unstable foam, if $t_{tr} < 10$s or classified as (meta)stable foam, if $t_{tr} > 10$s, preferably if $t_{tr} > 100$s.

**8.** The method according to any of the preceding claims, wherein the solution is selected from beer, waste water, sea water, (laundry) lye, extinguisher solutions, emulsions, microemulsions, suspensions, froth flotation, frost protection of plants, lung lavage or/and amniotic fluid or any other foam forming solution.

**9.** A method for determining and/or evaluating foam properties of a solution, wherein a predefined volume of gas is introduced into a predefined volume of the solution to be tested and foam volume $V^F$ and volume of drained solution $V^s$ are measured in relation to time, **characterized in that** foam stability is classified on the basis of the ratio $\Delta V^F/\Delta V^S$, wherein, in the initial stage, the reduction of foam volume $\Delta V^F$ corresponds to the increase of volume of drained solution $\Delta V^S$ such that $\Delta V^F/\Delta V^S = 1$, and wherein at a time of deviation $t_{dev}$ foam rupture begins, with $t_{dev}$ being indicated by the transition from $\Delta V^F/\Delta V^S = 1$ to $\Delta V^F/\Delta V^S > 1$.

## Patentansprüche

**1.** Verfahren zur Bestimmung und/oder Evaluierung der Schaumeigenschaften einer Lösung, wobei ein vorbestimmtes Volumen an Gas in ein vorbestimmtes Volumen der zu untersuchenden Lösung eingebracht wird und die Schaumhöhe $h^F$ und der Ausfluss an Lösung $h^S$ in Abhängigkeit von der Zeit gemessen werden, **dadurch gekennzeichnet, dass** die Schaumstabilität auf Grundlage des Verhältnisses $\Delta h^F/\Delta h^S$ klassifiziert wird, wobei in der Anfangsphase die Abnahme der Schaumhöhe $\Delta h^F$ der Zunahme an Lösung $\Delta h^S$ entspricht, so dass $\Delta h^F/\Delta h^S = 1$ ist, und wobei an einem Abweichungszeitpunkt $t_{dev}$ ein Zerfall des Schaums einsetzt, wobei $t_{dev}$ durch den Übergang von $\Delta h^F/\Delta h^S = 1$ zu $\Delta h^F/\Delta h^S > 1$ angezeigt wird.

**2.** Verfahren nach Anspruch 1, wobei der Zerfall des Schaums in die Kategorien

(a) Anfangsphase,
(b) Übergangsphase oder
(c) Endphase

klassifiziert wird.

**3.** Verfahren nach Anspruch 1 oder 2, wobei zusätzlich mindestens einer der charakteristischen Parameter $\Delta h^F$-$\Delta h^S$, $t_{tr}$, $v^F$, $v^S$, $v^F{}_{dev}$, $v^S{}_{dev}$, $V^F$, $V^S$ und/oder $v_0$ bestimmt wird.

**4.** Verfahren nach einem der vorhergehenden Ansprüche, wobei

(i) Schäumbarkeit,

(ii) Schaumstabilität,
(iii) Flüssiggehalt im Schaum,
(iv) Abflussgeschwindigkeiten

bestimmt werden.

**5.** Verfahren nach einem der vorhergehenden Ansprüche, wobei eine Klassifizierung in

(I) instabile Schäume oder
(II) (meta)stabile Schäume

vorgenommen wird.

**6.** Verfahren nach einem der vorhergehenden Ansprüche, wobei der Schaum als instabiler Schaum klassifiziert wird, wenn $t_{dev} \leq 1$ s ist, oder als (meta)stabiler Schaum klassifiziert wird, wenn $t_{dev} > 1$ s ist, bevorzugt wenn $t_{dev} > 10$ s ist.

**7.** Verfahren nach einem der vorhergehenden Ansprüche, wobei der Schaum als instabiler Schaum klassifiziert wird, wenn $t_{tr} < 10$ s ist, oder als (meta)stabiler Schaum klassifiziert wird, wenn $t_{tr} > 10$ s ist, bevorzugt wenn $t_{tr} > 100$ s ist.

**8.** Verfahren nach einem der vorhergehenden Ansprüche, wobei die Lösung aus Bier, Abwasser, Meerwasser, (Wasch-) Lauge, Löschlösungen, Emulsionen, Mikroemulsionen, Suspensionen, Schaumflotation, Frostschutzmitteln für Pflanzen, Lungenlavage oder/und amniotischer Flüssigkeit, oder einer beliebigen anderen schaumbildenden Lösung ausgewählt ist.

**9.** Verfahren zur Bestimmung und/oder Evaluierung der Schaumeigenschaften einer Lösung, wobei ein vorbestimmtes Volumen an Gas in ein vorbestimmtes Volumen der zu untersuchenden Lösung eingebracht wird und das Schaumvolumen $V^F$ und das Volumen an abgeflossener Lösung $V^s$ in Abhängigkeit von der Zeit gemessen werden,
**dadurch gekennzeichnet, dass** die Schaumstabilität auf Grundlage des Verhältnisses $\Delta V^F/\Delta V^S$ klassifiziert wird, wobei in der Anfangsphase die Abnahme des Schaumvolumens $\Delta V^F$ der Zunahme des Volumens an abgeflossener Lösung $\Delta V^S$ entspricht, so dass $\Delta V^F/\Delta V^S = 1$ ist, und wobei an einem Abweichungszeitpunkt $t_{dev}$ ein Zerfall des Schaums einsetzt, wobei $t_{dev}$ durch den Übergang von $\Delta V^F/\Delta V^S = 1$ zu $\Delta V^F/\Delta V^S > 1$ angezeigt wird.

## Revendications

**1.** Procédé de détermination et/ou d'évaluation des propriétés de foisonnement d'une solution, dans lequel un volume prédéfini de gaz est introduit dans un volume prédéfini de la solution à tester et la hauteur de mousse $h^F$ et l'écoulement de solution $h^S$ sont mesurés en fonction du temps,
**caractérisé en ce que** la stabilité de la mousse est classifiée en se fondant sur le rapport $\Delta h^F/\Delta h^S$, dans lequel la réduction de la hauteur de mousse $\Delta h^F$ correspond, au stade initial, à l'augmentation de la solution $\Delta h^S$, de sorte que $\Delta h^F/\Delta h^S = 1$ et dans lequel la rupture de la mousse commence à un temps de déviation $t_{dev}$, $t_{dev}$ étant indiqué par la transition de $\Delta h^F/\Delta h^S = 1$ à $\Delta h^F/\Delta h^S > 1$.

**2.** Procédé selon la revendication 1, dans lequel la désintégration de la mousse est classifiée selon les catégories suivantes :

(a) stade initial,
(b) stade intermédiaire ou
(c) stade final.

**3.** Procédé selon la revendication 1 ou 2, dans lequel au moins un des paramètres caractéristiques $\Delta h^F$ - $\Delta h^S$, $t_{tr}$, $v^F$, $v^S$, $v^F$dev, $v^S$dev, $V^F$, $V^S$ et/ou $V_0$ est également déterminé.

**4.** Procédé selon l'une quelconque des revendications précédentes, dans lequel

(i) la propension à mousser,
(ii) la stabilité de la mousse,
(iii) la teneur en liquide de la mousse,

(iv) les taux d'écoulement

sont déterminés.

**5.** Procédé selon l'une quelconque des revendications précédentes, dans lequel un classement en

(I) mousses instables ou
(II) mousses (méta)stables

est réalisé.

**6.** Procédé selon l'une quelconque des revendications précédentes, dans lequel la mousse est classifiée comme mousse instable si $t_{dev} \leq 1$ s ou classifiée comme mousse (méta)stable si $t_{dev} > 1$ s, de préférence si $t_{dev} > 10$ s.

**7.** Procédé selon l'une quelconque des revendications précédentes, dans lequel la mousse est classifiée comme mousse instable si $t_{tr} < 10$ s ou classifiée comme mousse (méta)stable si $t_{tr} > 10$ s, de préférence si $t_{tr} > 100$ s.

**8.** Procédé selon l'une quelconque des revendications précédentes, dans lequel la solution est choisie parmi la bière, les eaux usées, l'eau de mer, les solutions de lessive, les solutions d'extincteur, les émulsions, les micro-émulsions, les suspensions, les flottations de mousse, les protections antigel pour plantes, les liquides de lavage pulmonaire et/ou le fluide amniotique ou toute autre solution formant de la mousse.

**9.** Procédé de détermination et/ou d'évaluation des propriétés de foisonnement d'une solution, dans lequel un volume prédéfini de gaz est introduit dans un volume prédéfini de la solution à tester et le volume de mousse $V^F$ et le volume de solution écoulée $V^s$ sont mesurés en fonction du temps,
**caractérisé en ce que** la stabilité de la mousse est classifiée en se fondant sur le rapport $\Delta V^F/\Delta V^S$, dans lequel la réduction de volume de mousse $\Delta V^F$ correspond, au stade initial, à l'augmentation de volume de solution écoulée $\Delta V^S$, de sorte que $\Delta V^F/\Delta V^S = 1$ et dans lequel la rupture de la mousse commence à un temps de déviation $t_{dev}$, $t_{dev}$ étant indiqué par la transition de $\Delta V^F/\Delta V^S = 1$ à $\Delta V^F/\Delta V^S > 1$.

Fig. 1

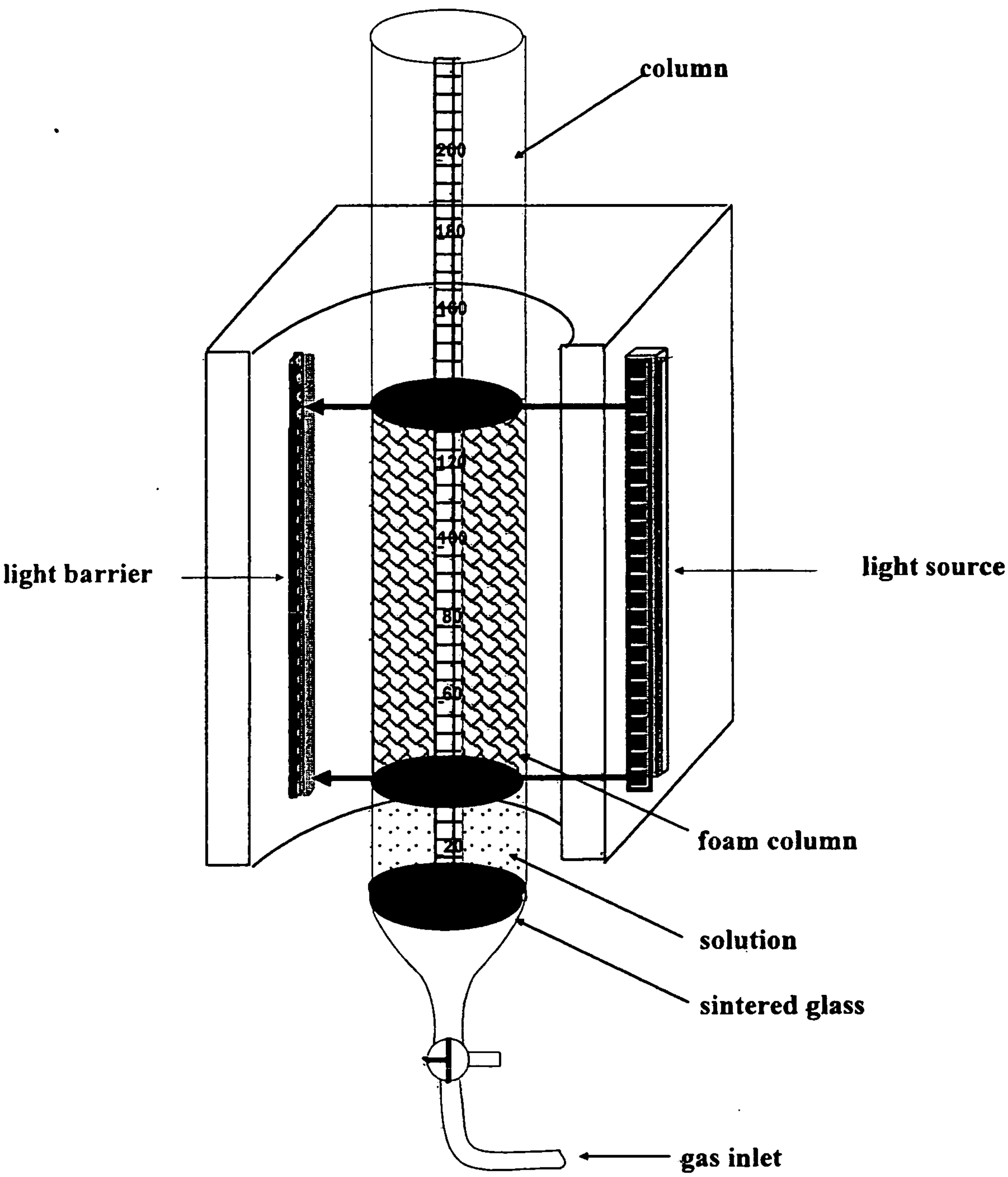
column
200
180
160
120
100
80
60
20
light barrier
light source
foam column
solution
sintered glass
gas inlet

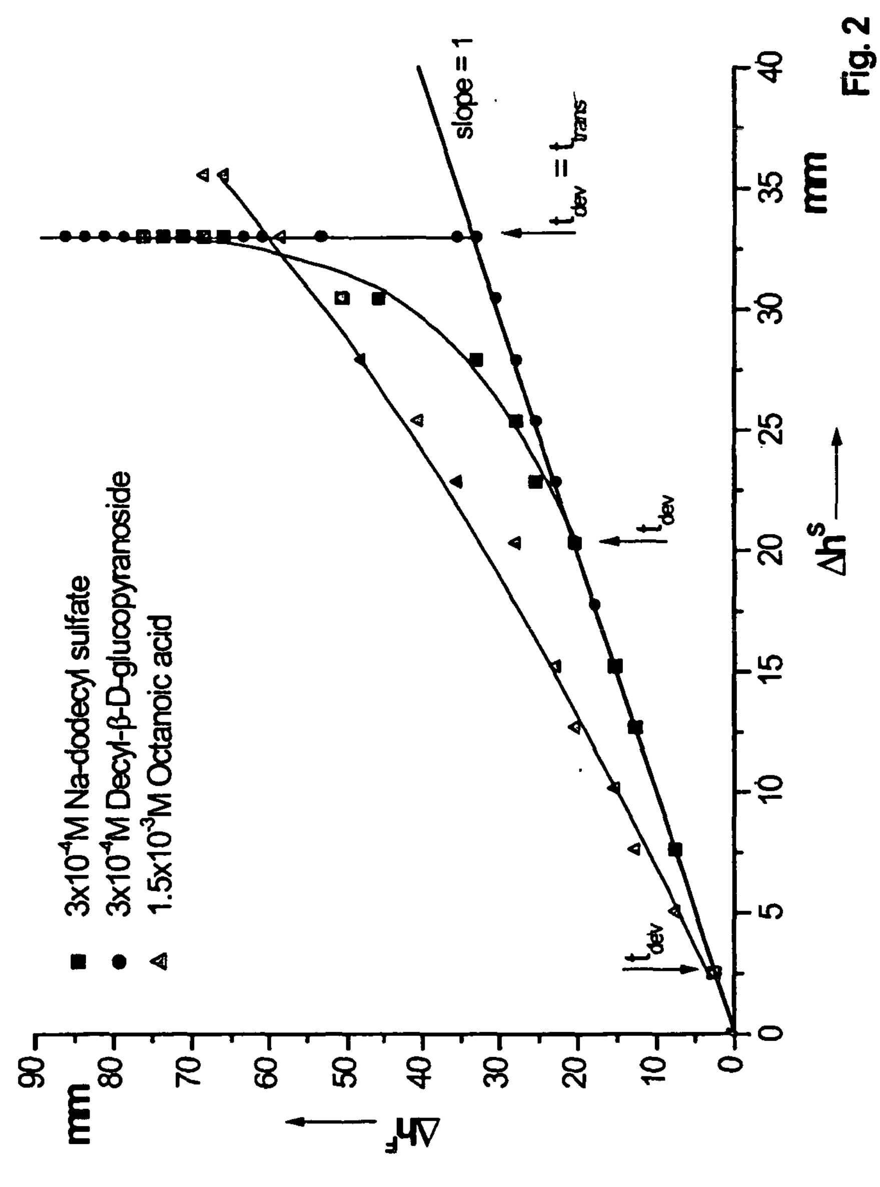
3x10-4M Na-dodecyl sulfate
3x10-4M Decyl-β-D-glucopyranoside
1.5x10-3M Octanoic acid
slope = 1
tdev = ttrans
tdev
tdev
Δhr
mm
Δhs
mm
0
10
20
30
40
50
60
70
80
90
0
5
10
15
20
25
30
35
40

Fig. 2

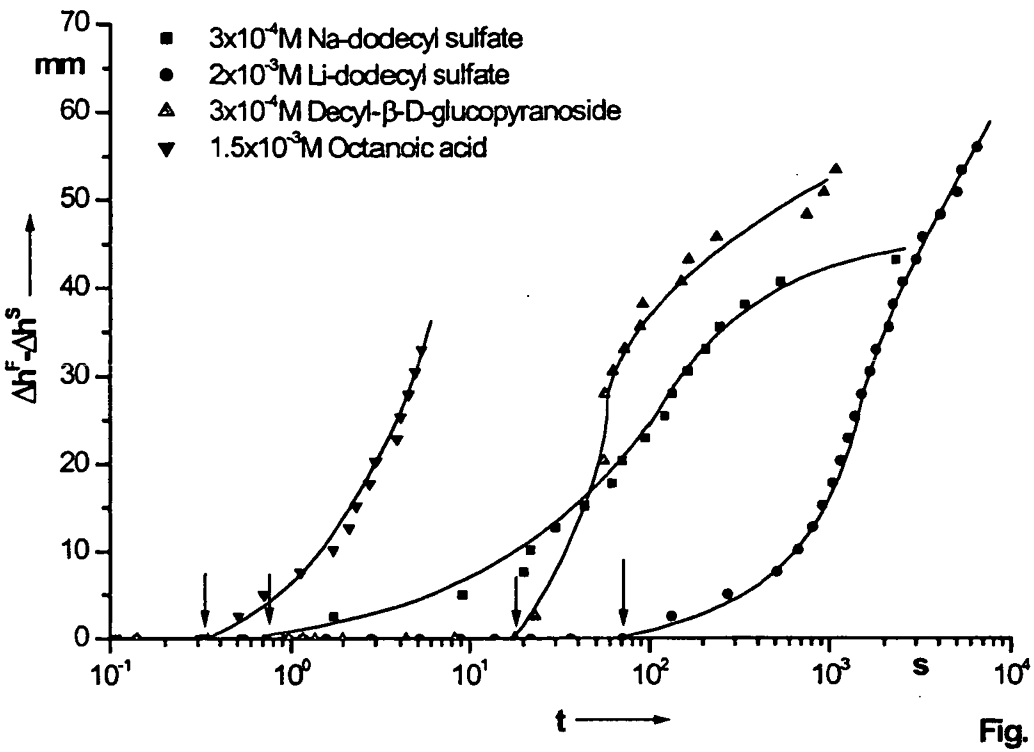
3x10-4M Na-dodecyl sulfate
2x10-3M Li-dodecyl sulfate
3x10-4M Decyl-β-D-glucopyranoside
1.5x10-3M Octanoic acid
mm
Δh^F-Δh^s
t
s

Fig. 3a

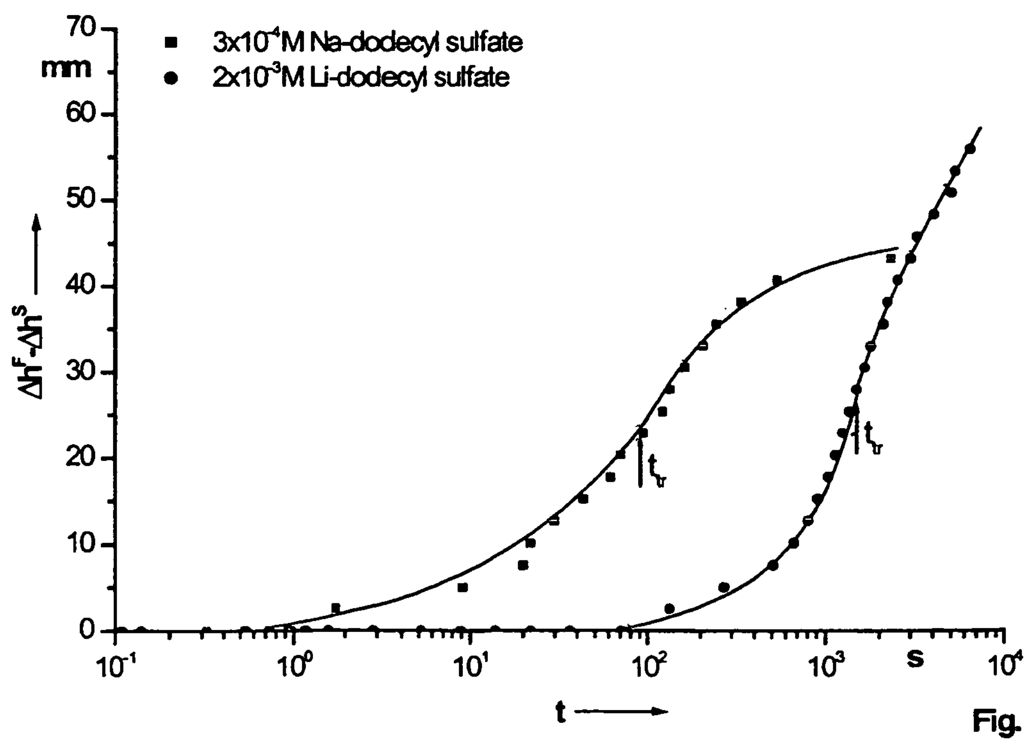
3x10-4M Na-dodecyl sulfate
2x10-3M Li-dodecyl sulfate
mm
Δh^F-Δh^s
t_tr
t_tr
t
s

Fig. 3b

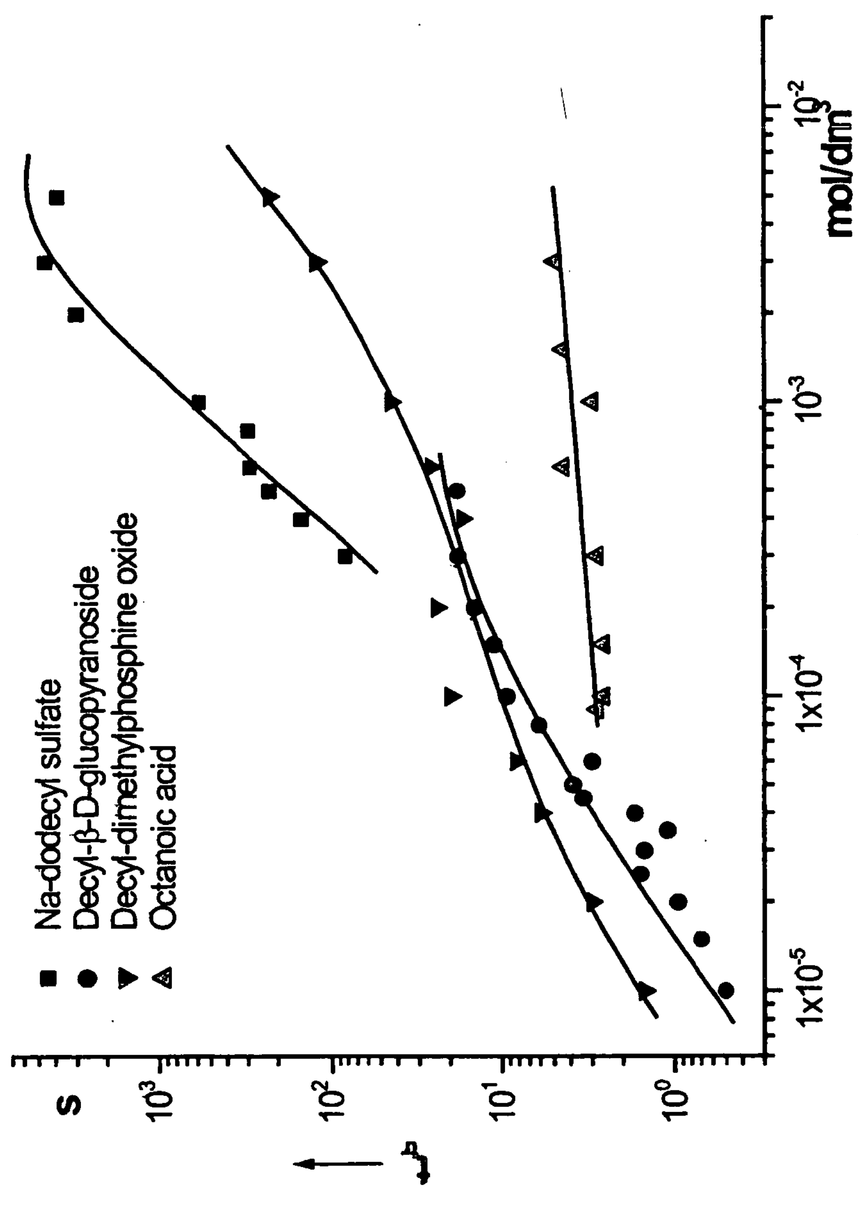

Na-dodecyl sulfate
Decyl-β-D-glucopyranoside
Decyl-dimethylphosphine oxide
Octanoic acid
S
10³
10²
10¹
10⁰
1x10⁻⁵
1x10⁻⁴
10⁻³
10⁻²
mol/dm³
C


Fig. 4

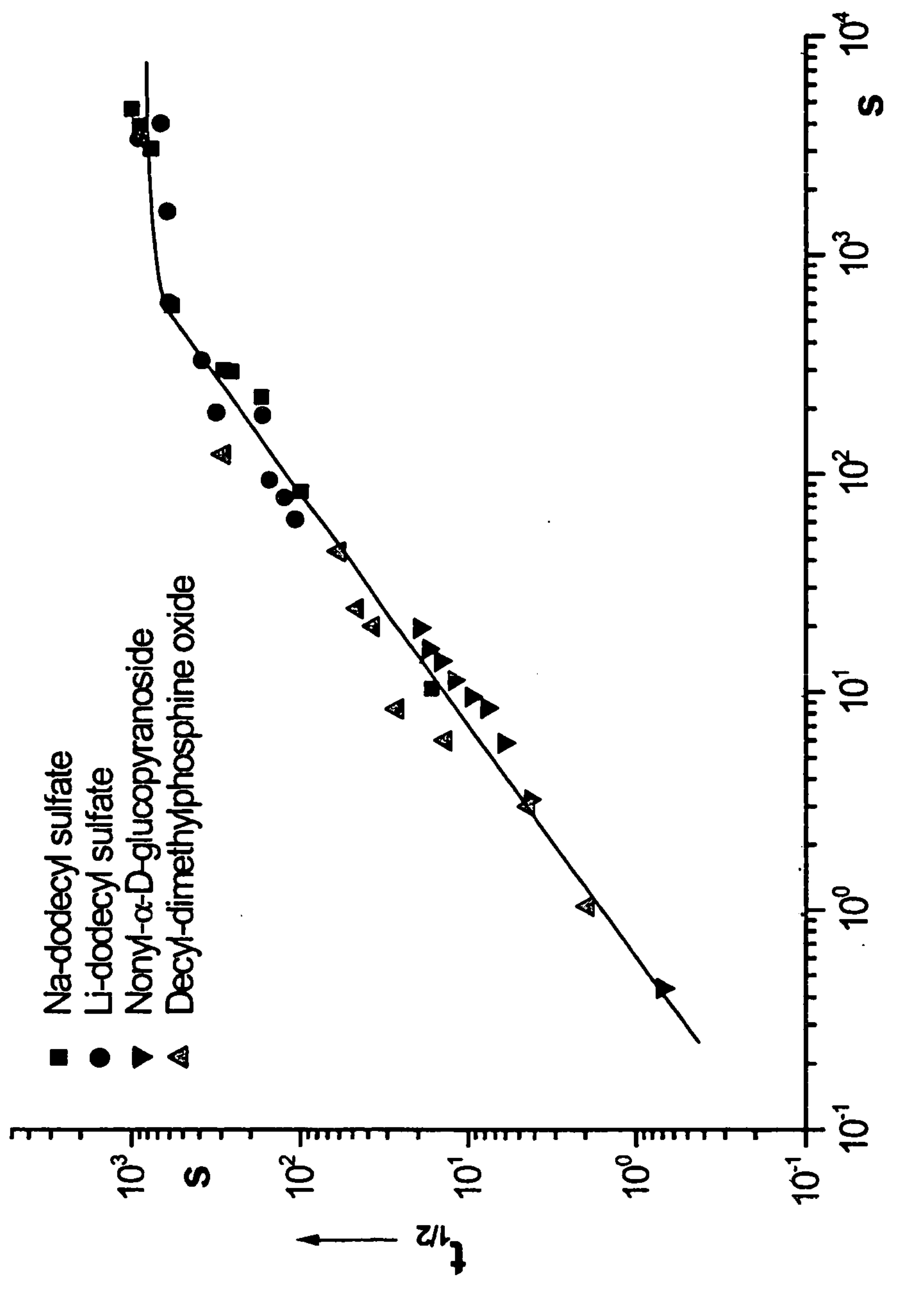
Na-dodecyl sulfate
Li-dodecyl sulfate
Nonyl-α-D-glucopyranoside
Decyl-dimethylphosphine oxide
$t_{1/2}$
s
$10^{-1}$
$10^{0}$
$10^{1}$
$10^{2}$
$10^{3}$
$10^{4}$
$t_{tr}$

Fig. 5

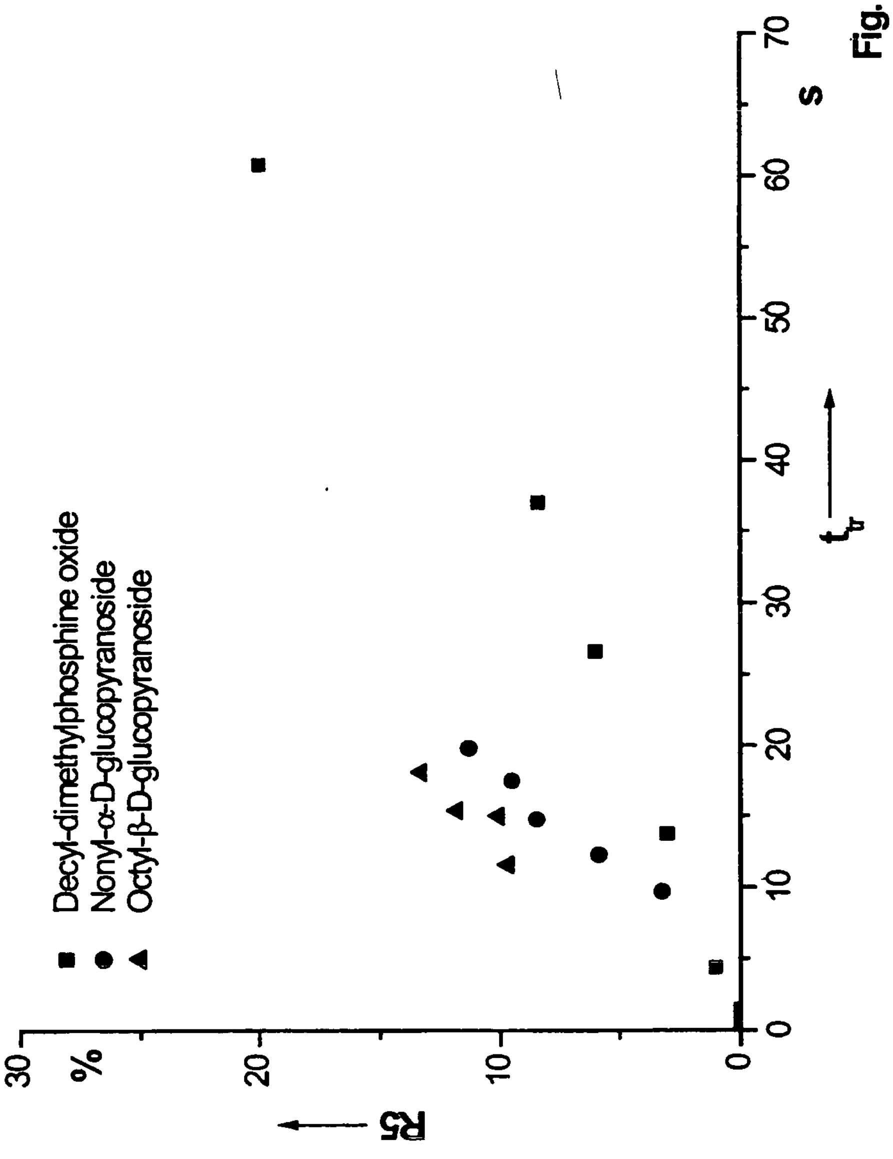
Decyl-dimethylphosphine oxide
Nonyl-α-D-glucopyranoside
Octyl-β-D-glucopyranoside
R5
%
30
20
10
0
0
10
20
30
40
50
60
70
$t_r$
s

Fig. 6

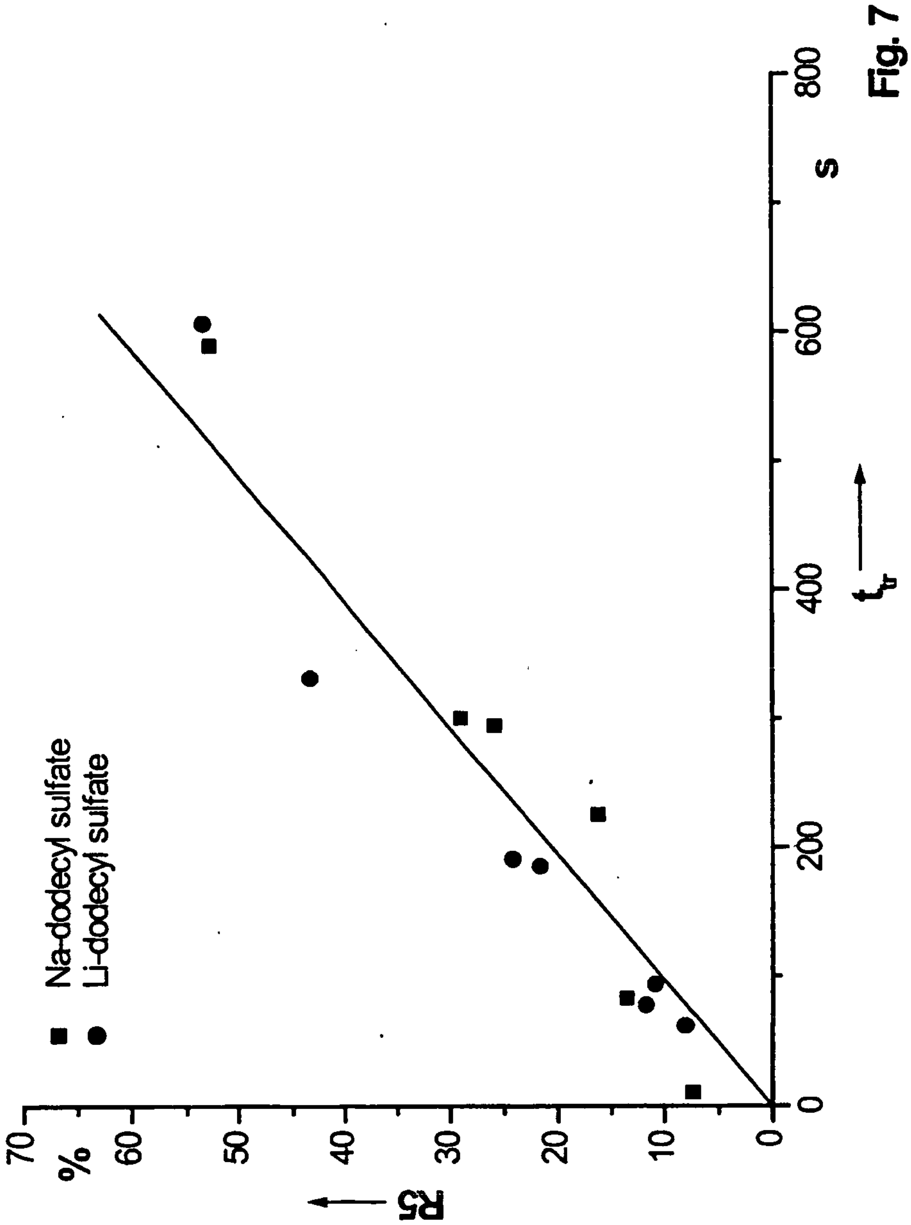
Na-dodecyl sulfate
Li-dodecyl sulfate
R5
%
70
60
50
40
30
20
10
0
0
200
400
600
800
s
t_r

Fig. 7

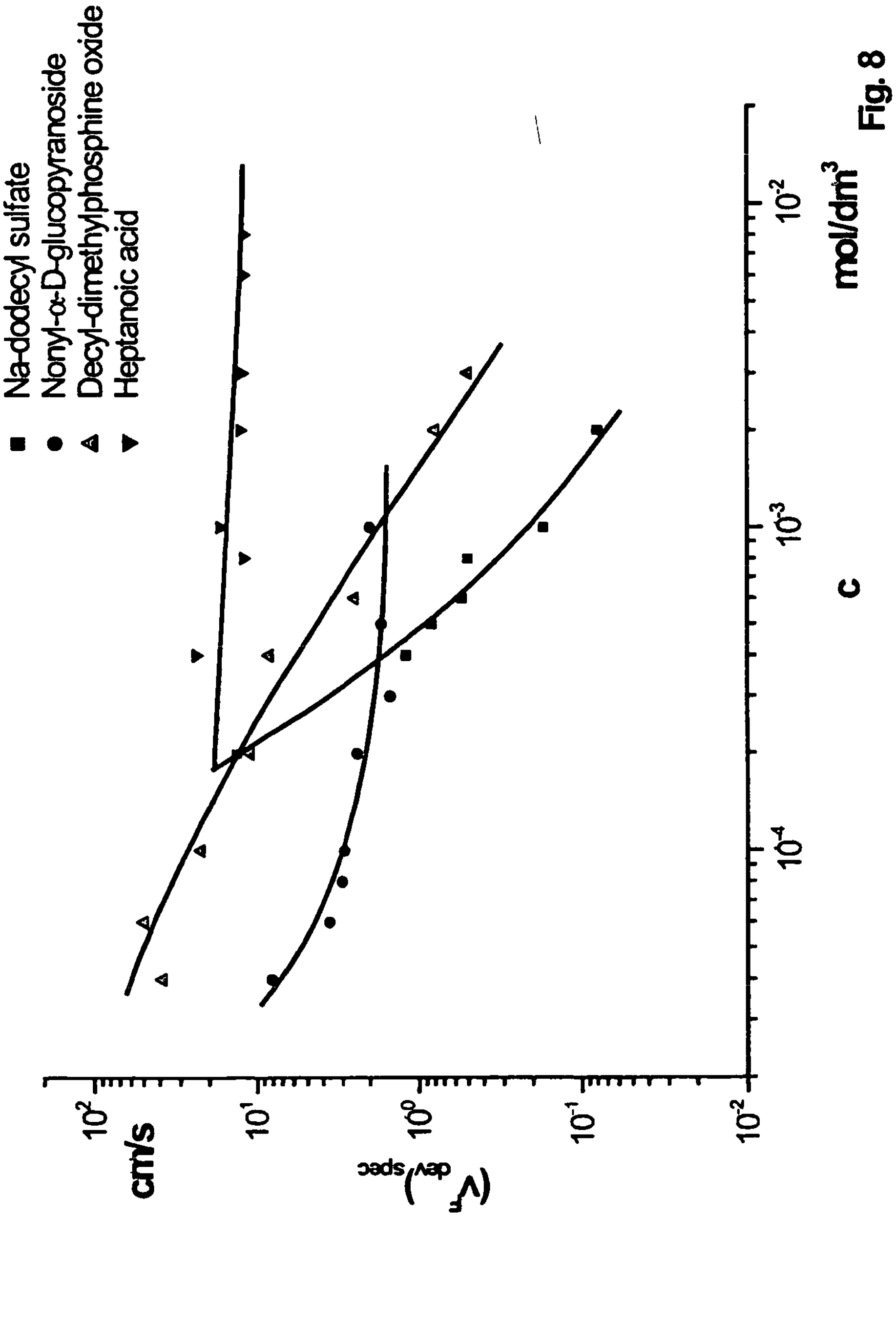
Na-dodecyl sulfate
Nonyl-α-D-glucopyranoside
Decyl-dimethylphosphine oxide
Heptanoic acid
cm/s
$(V_r)_{dev/spec}$
$10^2$
$10^1$
$10^0$
$10^{-1}$
$10^{-2}$
$10^{-4}$
$10^{-3}$
$10^{-2}$
c
$mol/dm^3$

Fig. 8

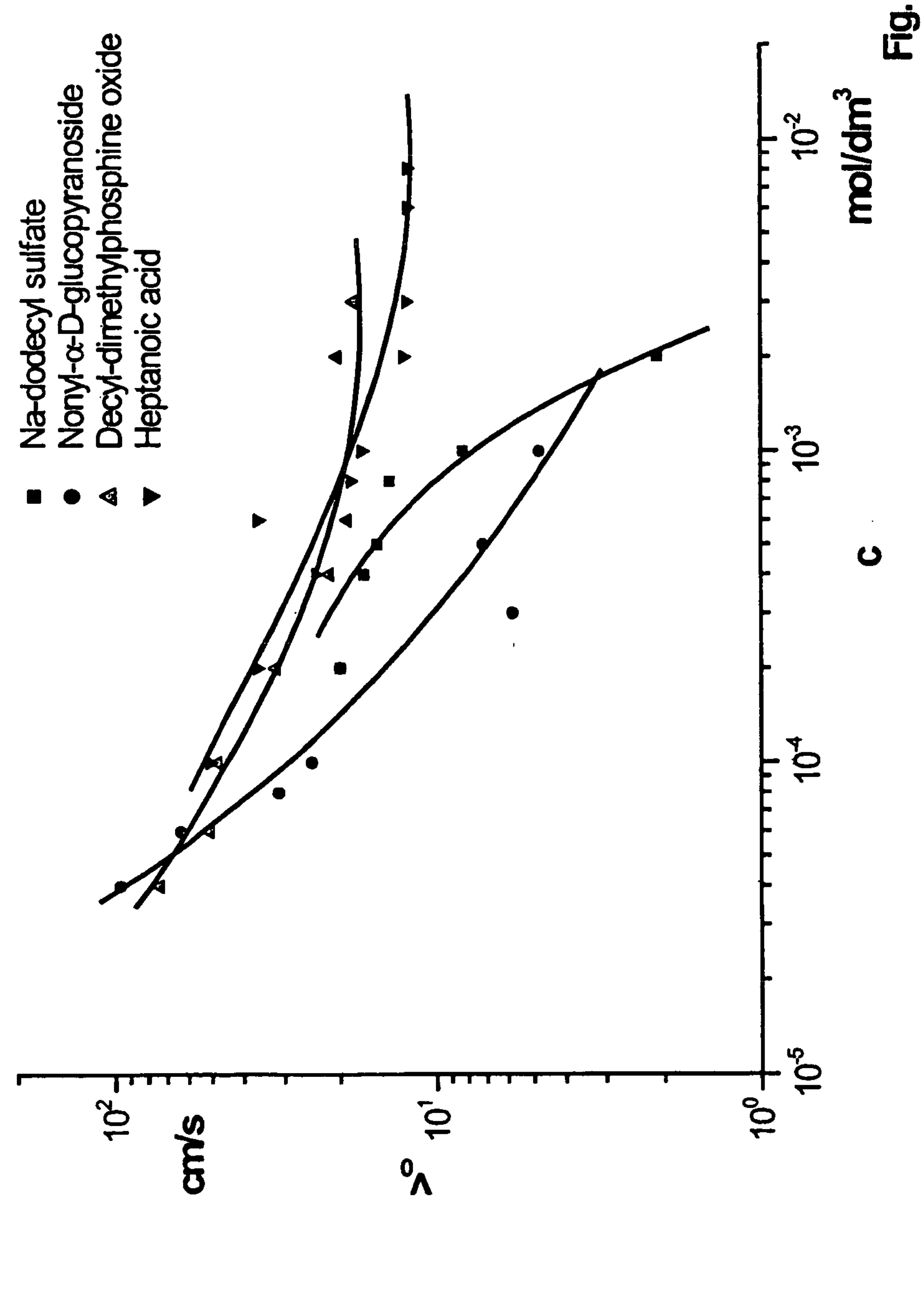
Na-dodecyl sulfate
Nonyl-α-D-glucopyranoside
Decyl-dimethylphosphine oxide
Heptanoic acid
cm/s
$v_0$
$10^2$
$10^1$
$10^0$
$10^{-5}$
$10^{-4}$
$10^{-3}$
$10^{-2}$
c
mol/dm$^3$

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5465610 A
- EP 0252738 A2
- EP 0990878 A1


### Non-patent literature cited in the description


- **GOHLKE, F. S.** Bestimmung des Schaumvermogens von Detergentien nach Ross-Miles. *Parfümerie und Kosmetik,* 1964, vol. 45, 59
- **BIKERMAN, J.J.** Foams. Springer-Verlag, 1973
- Foam and Foam Films: Theory, Experiment. **EXEROWA, D. ; KRUGLYAKOV, P.M.** Application. Elsevier, 1998
- **KELLY, W. R. ; BORZA, P. F.** Foam Test Method. *J. Amer. Oil Chemist s Soc.,* 1966, vol. 43, 364
- **LEMLICH, R.** Foam Fractionation in the Crits Ring Test. *J. Colloid Interface Sci.,* 1971, vol. 37, 497
- Light-Duty Liquid Detergents. **LAI, K.-Y. ; MCCANDLISH, E. F. K. ; ASZMAN, H.** Liquid Detergents. Marcel Dekker, 1997, vol. 67
- **PINAZO, A.P. ; INFANTE, M.R. ; FRANCES, E.I.** Relation of foam stability to solution and surface properties of gemini cationic surfactants derived from arginine. *Colloids and Surfaces A,* 2001, vol. 189, 225-235
- **GARRETT, P.R.** Recent developments in the understanding of foam generation and stability. *Chemical Engin. Science,* 1993, vol. 48, 367
- **PUGH, R.J.** Foaming, foam films, antifoaming and defoaming. *Advances Colloid Interface Sci.,* 1996, vol. 64, 67
- **KHRISTOV, KHR. ; MALYSA, K. ; EXEROWA, D.** Steady state foams: Influence of the type of liquid films. *Colloids and Surfaces,* 1984, vol. 11, 39
- **GUILLERME, C. ; LOISEL, W. ; BERTRAND, D. ; POPINEAU, Y.** Study of foam stability by video image analysis: relationship with the quantity of liquid in the foam. *J. Texture Studies,* 1993, vol. 24, 287
- **RAZAFINDRALAMBO, H. ; POPINEAU, Y. ; DELEU, M. ; HBID, C. ; JACQUES, P. ; THONART, P. ; PAQUOT, M.** Surface-active properties of surfactin/iturin A mixtures produced by bacillus subtilis. *Langmuir,* 1997, vol. 13, 6026
- **MALYSA, K. A. ; POMIANOWSKI, A.** Charakterystyka wspoldzialania flotacyjnego spieniacza i kolektora. *Fizykochem. Problemy Przerobki Kopalin,* 1976, vol. 10, 119-131
- **MALYSA, K. ; LUNKENHEIMER, K. ; MILLER, R. ; HARTENSTEIN, C.** Surface elasticity and frothability n-octanol and n-octanoic acid solutions. *Colloids & Surfaces,* 1981, vol. 3, 329-338
- **PERRIN, F. ; JUNG, U.** Schaum nicht nur wichtig für gutes Bier. *Laborpraxis,* March 2000, 60ff
- **LUNKENHEIMER, K. ; PERGANDE, H.-J. ; KRÜGER, H.** Apparatus for Programmed High-Performance Purification of Surfactant Solutions. *Rev. Sci. Instrum.,* 1987, vol. 58, 2313
- **LUNKENHEIMER, K. ; MILLER, R.** A Criterion for Judging the Purity of Adsorbed Surfactant Layers. *J. Colloid Interface Sci.,* 1987, vol. 120, 176